# EUROPEAN PATENT APPLICATION

(11) **EP 4 561 015 A1**
(43) Date of publication of application: **28.05.2025**
(21) Application number: 23845016.7
(22) Date of filing: 22.05.2023
(51) Int. Cl.: H04L 49/90

(54) **PACKET FORWARDING APPARATUS AND METHOD, COMMUNICATION CHIP, AND NETWORK DEVICE**

(30) Priority: 26.07.2022 CN 202210886409
(71) Applicant: Huawei Technologies Co., Ltd., Shenzhen, Guangdong 518129 (CN)
(72) Inventor: XU, Hongbo, Shenzhen, Guangdong 518129 (CN); LI, Zhonghua, Shenzhen, Guangdong 518129 (CN)
(74) Representative: Pfenning, Meinig & Partner mbB
(86) International application number: PCT/CN2023/095571
(87) International publication number: WO 2024/021801

(57) **Abstract**

Embodiments of this application provide a packet forwarding apparatus and method, a communication chip, and a network device, which are applied to the field of communication technologies, to resolve a problem of increased power consumption of buffer access and reduced buffer utilization caused when a network processor and a traffic manager in a forwarding chip need to separately process packets during packet forwarding. First, the network processor sends at least one descriptor to the traffic manager, where the at least one descriptor indicates a storage address of at least one packet in a buffer module. Second, the traffic manager sends first information of a to-be-forwarded packet to the network processor based on the at least one descriptor and a preset forwarding routing table. Then, the network processor obtains the to-be-forwarded packet based on the received first information, and sends the to-be-forwarded packet to the traffic manager. Finally, the traffic manager receives and forwards the to-be-forwarded packet.

## Description

This application claims priority to Chinese Patent Application No. 202210886409.2, filed with the China National Intellectual Property Administration on July 26, 2022 and entitled "PACKET FORWARDING APPARATUS AND METHOD, COMMUNICATION CHIP, AND NETWORK DEVICE", which is incorporated herein by reference in its entirety.

### TECHNICAL FIELD

This application relates to the field of communication technologies, and in particular, to a packet forwarding apparatus and method, a communication chip, and a network device.

### BACKGROUND

A switch is a network device used to forward network data packets. The switch can connect a plurality of devices to a computer network and forward data to a destination by exchanging data packets. During data forwarding, a forwarding chip in the switch plays a key role. However, for a forwarding scenario in which off-chip buffering is not required, currently, a packet forwarded by a network processor (network processor, NP) in the forwarding chip is individually buffered by a buffer inside the network processor, and a packet processed by a traffic manager (traffic manager, TM) is individually buffered by a buffer inside the traffic manager. This increases power consumption caused by accessing buffers and reduces buffer utilization. Therefore, there is an urgent need to provide a solution to resolve the foregoing problem.

### SUMMARY

An objective of this application is to provide a packet forwarding apparatus and method, a communication chip, and a network device, to resolve a problem that a same packet needs to be repeatedly read and written when being forwarded by a network processor and a traffic manager in a forwarding chip. This reduces power consumption caused by accessing buffers, and improves buffer utilization.

To achieve the foregoing objective, embodiments of this application provide the following technical solutions.

According to a first aspect, a packet forwarding apparatus is provided. The packet forwarding apparatus includes a network processor and a traffic manager connected to the network processor, and a buffer module is disposed inside the network processor. The network processor is configured to send at least one descriptor to the traffic manager, where the at least one descriptor indicates a storage address of at least one packet in the buffer module. Next, the traffic manager is configured to send first information of a to-be-forwarded packet to the network processor based on the at least one descriptor, where the to-be-forwarded packet is one of the at least one packet, and the first information indicates a storage address of the to-be-forwarded packet in the buffer module. Then, the network processor is configured to: obtain the to-be-forwarded packet based on the first information, and send the obtained to-be-forwarded packet to the traffic manager. Finally, the traffic manager is configured to receive and forward the to-be-forwarded packet. Based on this, a read/write operation only needs to be performed once in the buffer module of the network processor for the packet, and does not need to be performed again in the buffer module of the traffic manager. This reduces power consumption caused by accessing the buffer module, and improves buffer utilization.

In a possible implementation, the at least one descriptor further indicates a packet priority and a packet length of the at least one packet. The traffic manager is further configured to determine a first mark of the to-be-forwarded packet based on the packet priority and the packet length, where the first mark indicates a forwarding sequence of the to-be-forwarded packet. When sending the first information to the network processor, the traffic manager also includes the first mark in the first information. Based on this, the network processor can sequentially read the to-be-forwarded packets based on the forwarding sequence. This improves accuracy and efficiency of reading the to-be-forwarded packets.

In a possible implementation, before the network processor sends the at least one descriptor to the traffic manager, the network processor is further configured to first store the at least one received packet in the buffer module in a form of cells. The at least one packet includes an original packet header, packet data, and a packet terminator, and each cell corresponds to a storage address in the buffer module. Then, the network processor reads the original packet header of the packet from the buffer module, and generates a new packet header based on the original packet header and a preset forwarding routing table. Finally, the network processor writes the new packet header in the buffer module. Based on this, the network processing module only needs to read the original packet header in the buffer module and generate a new packet header, and does not need to read packet data. This also reduces power consumption.

In a possible implementation, when the packet is a unicast packet and a length of the new packet header exceeds a length of the original packet header, the network processor is configured to: divide the new packet header into a first part and a second part, replace the original packet header with the first part, and store the second part in free space of a storage address corresponding to a cell in which the packet terminator is located. Based on this, when the length of the new packet header exceeds the length of the original packet header, there is no need to reallocate a storage address. This further reduces power consumption.

In a possible implementation, when the second part is longer than the free space of the storage address corresponding to the cell in which the packet terminator is located, the network processor is further configured to: divide the second part into a first segment and a second segment, store the first segment in the free space of the storage address corresponding to the cell in which the packet terminator is located, and store the second segment in a newly added storage address. Based on this, buffer space can be fully utilized.

In a possible implementation, when the packet is a unicast packet and a length of the new packet header exceeds a length of the original packet header, the network processor is further configured to: divide the new packet header into a first part and a second part, replace the original packet header with the first part, and store the second part in a newly added storage address. Based on this, the network processor does not need to compare the length of the second part with the free space of the storage address corresponding to the cell in which the packet terminator is located, so that a processing procedure is simplified and storage efficiency is improved.

In a possible implementation, when the packet is a multicast packet, the network processor is further configured to store the new packet header in the newly added storage address. Based on this, a structure of the multicast packet can be avoided from being changed.

According to a second aspect, a packet forwarding method is provided. The packet forwarding method is applied to a packet forwarding apparatus including a network processor and a traffic manager. The method includes: First, the network processor sends at least one descriptor to the traffic manager, where the at least one descriptor indicates a storage address of at least one packet in a buffer module. Second, the traffic manager sends first information of a to-be-forwarded packet to the network processor based on the at least one descriptor, where the to-be-forwarded packet is one of the at least one packet, and the first information indicates a storage address of the to-be-forwarded packet in the buffer module. Then, the network processor obtains the to-be-forwarded packet based on the first information, and sends the to-be-forwarded packet to the traffic manager. Finally, the traffic manager receives and forwards the to-be-forwarded packet.

In a possible implementation, the at least one descriptor further indicates a packet priority and a packet length of the at least one packet. The traffic manager may further determine a first mark based on the packet priority and the packet length, where the first mark indicates a forwarding sequence of the to-be-forwarded packet. When sending the first information of the to-be-forwarded packet to the network processor based on the foregoing descriptors, the traffic manager may also include the first mark in the first information and send the first information to the network processor.

In a possible implementation, before sending the at least one descriptor to the traffic manager, the network processor may further store the at least one received packet in the buffer module in a form of cells, where each cell corresponds to a storage address in the buffer module, and each packet includes an original packet header, packet data, a packet terminator, and the like. Then, the network processor obtains the original packet header from the buffer module. Finally, the network processor generates a new packet header based on the original packet header and a preset forwarding routing table, and stores the new packet header in the buffer module.

In a possible implementation, in a process in which the network processor generates the new packet header based on the original packet header and the preset forwarding routing table, and stores the new packet header in the buffer module, the network processor may further determine whether the packet is a unicast packet. If the packet is a unicast packet and a length of the new packet header exceeds a length of the original packet header, the network processor divides the new packet header into a first part and a second part, replaces the original packet header with the first part, and stores the second part in free space of a storage address corresponding to a cell in which the packet terminator is located.

In a possible implementation, in a process of storing the second part in the free space of the storage address corresponding to the cell in which the packet terminator is located, the network processor may further determine whether the second part is longer than the free space of the storage address corresponding to the cell in which the packet terminator is located. If the second part is longer than the free space of the storage address corresponding to the cell in which the packet terminator is located, the network processor divides the second part into a first segment and a second segment, stores the first segment in the free space of the storage address corresponding to the cell in which the packet terminator is located, and stores the second segment in a newly added storage address.

In a possible implementation, in a process in which the network processor generates the new packet header based on the original packet header and the preset forwarding routing table, and stores the new packet header in the buffer module, if it is determined that the packet is a unicast packet and a length of the new packet header exceeds a length of the original packet header, the network processor may divide the new packet header into a first part and a second part, replace the original packet header with the first part, and store the second part in a newly added storage address.

In a possible implementation, in a process in which the network processor generates the new packet header based on the original packet header and the preset forwarding routing table, and stores the new packet header in the buffer module, if the network processor determines that the packet is a multicast packet, the network processor may store the new packet header in the newly added storage address.

According to a third aspect, a communication chip is provided. The communication chip includes a processor and a memory. The memory is configured to store program instructions, and the processor is configured to execute the program instructions in the memory, to implement the method according to any possible implementation of the second aspect.

According to a fourth aspect, a network device is provided. The network device includes the packet forwarding apparatus according to any possible implementation of the first aspect.

According to a fifth aspect, a computer-readable storage medium is provided. The computer-readable storage medium stores computer-readable program instructions. When the program instructions are run on a packet forwarding apparatus, the method according to any possible implementation of the second aspect is implemented.

According to a sixth aspect, a computer program product is provided. When the computer program product is run on a computer, the method according to any possible implementation of the second aspect is implemented.

For technical effects that can be brought by the second aspect to the sixth aspect, refer to the first aspect. Details are not described herein again.

### BRIEF DESCRIPTION OF DRAWINGS

FIG. 1 is a diagram of a working principle of an existing switch according to an embodiment of this application;
FIG. 2 is a diagram of a hardware structure of a packet forwarding apparatus according to an embodiment of this application;
FIG. 3 is a schematic flowchart of a packet forwarding method according to an embodiment of this application;
FIG. 4 is a diagram of a storage manner of an original packet header according to an embodiment of this application;
FIG. 5 is a diagram of a storage manner of a new packet header according to an embodiment of this application;
FIG. 6 is a schematic flowchart of storing a new packet header according to an embodiment of this application;
FIG. 7 is a schematic flowchart of storing still another new packet header according to an embodiment of this application;
FIG. 8 is a schematic flowchart of storing still another new packet header according to an embodiment of this application;
FIG. 9 is a schematic of a topology structure of a packet forwarding apparatus according to an embodiment of this application; and
FIG. 10 is a schematic of a topology structure of still another packet forwarding apparatus according to an embodiment of this application.

### DESCRIPTION OF EMBODIMENTS

The following describes technical solutions in embodiments of this application with reference to accompanying drawings in embodiments of this application.

In descriptions of this application, unless otherwise specified, the character "/" represents an "or" relationship between associated objects. For example, A/B may represent A or B. In this application, "and/or" merely describes an association relationship between associated objects and represents that three relationships may exist. For example, A and/or B may represent three cases: Only A exists, both A and B exist, and only B exists, where A and B may be singular or plural. Moreover, in descriptions of this application, unless otherwise specified, "a plurality of" means two or more than two. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used for distinguishing between same items or similar items that have basically same functions or purposes. A person skilled in the art may understand that the words such as "first" and "second" do not limit a quantity or an execution sequence, and the words such as "first" and "second" do not indicate a definite difference. In addition, in embodiments of this application, words such as "example" or "for example" represent giving an example, an illustration, or a description. Any embodiment or design solution described as "example" or "for example" in embodiments of this application should not be explained as being more preferred or advantageous than another embodiment or design solution. Exactly, use of the words such as "example" or "for example" is intended to present a related concept in a specific manner for ease of understanding.

The following describes the present invention in detail with reference to the accompanying drawings and embodiments.

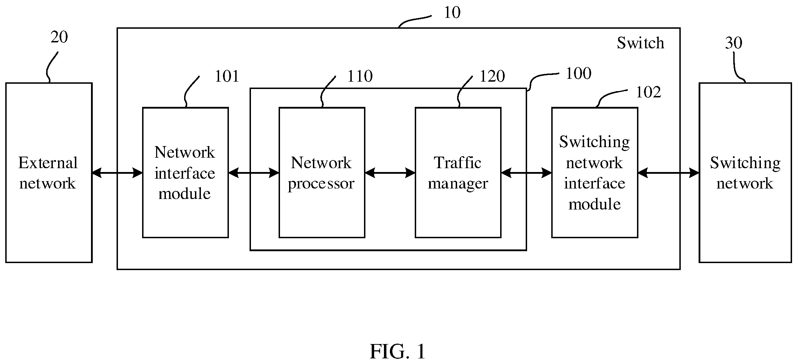

As shown in FIG. 1, an embodiment of this application provides a diagram of an architecture of a switching network. In the switching network, an external network 20 is connected to a switching network 30 via a network device. The network device may be a device such as a switch or a router having a switching function. In a switch example, an existing switch 10 is usually formed by a network interface module 101, a packet forwarding apparatus 100, a switching network interface module 102, and the like. The network interface module 101 is configured to connect to the external network 20, and receive a packet sent by the external network 20. The packet forwarding apparatus 100 is connected to the network interface module 101, and is configured to generate a to-be-forwarded packet based on the packet, and then transmit the to-be-forwarded packet to the corresponding switching network 30 via the switching network interface module 102. The foregoing packet forwarding apparatus 100 typically uses a forwarding chip including a network processor (network processor, NP) 110 and a traffic manager (traffic manager, TM) 120. The NP is a programmable device for data packet processing, protocol analysis, route search, and the like in a communication field. The TM implements service data buffering, traffic shaping, congestion avoidance, and the like. A buffer is disposed in both the NP and the TM. In an application scenario in which no off-chip buffer is required, a packet forwarded by the NP is individually buffered by a buffer inside the NP, and a packet processed by the TM is individually buffered by a buffer inside the TM. However, this buffer manner means that a same packet is completely written and read once on the NP, and then completely written and read once on the TM. In other words, the same packet is completely read and written twice. Consequently, power consumption caused by accessing the buffers is increased, and buffer utilization is reduced.

Based on the problem discussed in the background part, embodiments of this application provide a packet forwarding method applied to the packet forwarding apparatus 100. When performing output scheduling, the traffic manager 120 in the packet forwarding method obtains a to-be-forwarded packet from a buffer module 111 of the network processor 110, and then receives and forwards the to-be-forwarded packet, so that the packet only needs to be subject to a read and write operation once in the network processor 110. This reduces power consumption caused by accessing the buffers and improves buffer utilization.

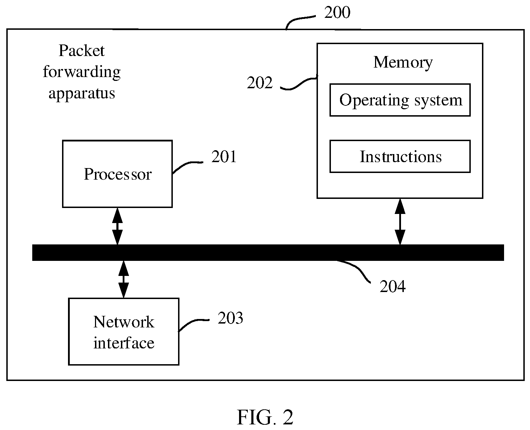

FIG. 2 is a diagram of a hardware structure of a packet forwarding apparatus 200 according to an embodiment of this application. The packet forwarding apparatus 200 includes a processor 201, a memory 202, and a network interface 203.

The processor 201 may be a general-purpose central processing unit (central processing unit, CPU), a microprocessor, an application-specific integrated circuit (application-specific integrated circuit, ASIC), or one or more integrated circuits configured to control program execution of the solutions in this application. During specific implementation, in an embodiment, the processor 201 may alternatively include a plurality of CPUs, and the processor 201 may be a single-core (single-CPU) processor or a multi-core (multi-CPU) processor. The processor here may be one or more devices, circuits, or processing cores configured to process data (for example, computer program instructions). The network processor (network processor, NP) 110 and the traffic manager (traffic manager, TM) 120 provided in this embodiment of this application may be integrated into the processor 201. The network processor (network processor, NP) 110 and the traffic manager (traffic manager, TM) 120 may alternatively be implemented by using a discrete processor 201.

The memory 202 may be an apparatus having a storage function. For example, the memory 202 may be a read-only memory (read-only memory, ROM), or another type of static storage device that can store static information and instructions, or a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or data structure and that can be accessed by a computer. However, this is not limited herein. The memory 202 may exist independently, and is connected to the processor 201 through a communication line. Alternatively, the memory 202 may be integrated with the processor 201.

The memory 202 is configured to store computer-executable instructions for executing the solutions of this application, and the processor 201 controls execution. Specifically, the processor 201 is configured to execute the computer-executable instructions stored in the memory 202, to implement the packet forwarding method according to embodiments of this application. In this embodiment of this application, the data stored in the memory 202 may include the packet provided in this embodiment of this application. This is not specifically limited in this embodiment of this application. It should be noted that the memory 202 may include the buffer module 111 provided in this embodiment of this application, and the buffer module 111 and the processor 201 may be integrated into a same chip. Alternatively, the buffer module 111 and the processor 201 may be disposed independently.

Optionally, the processor 201 implements, by reading instructions stored in the memory 202, the packet forwarding method provided in this embodiment of this application. Alternatively, the processor 201 implements, by using internally stored instructions, the packet forwarding method provided in this embodiment of this application. When the processor 201 implements the method in the foregoing embodiments by reading the instructions stored in the memory 202, the memory 202 stores the instructions for implementing the packet forwarding method provided in the foregoing embodiments of this application.

The network interface 203 is a wired interface (port), for example, an FDDI or a GE interface. Alternatively, the network interface 203 is a wireless interface. It should be understood that the network interface 203 includes a plurality of physical ports, and the network interface 203 is configured for packet forwarding and the like.

Optionally, the packet forwarding apparatus 200 further includes a bus 204. The processor 201, the memory 202, and the network interface 203 are usually connected to each other through the bus 204, or are connected to each other in another manner.

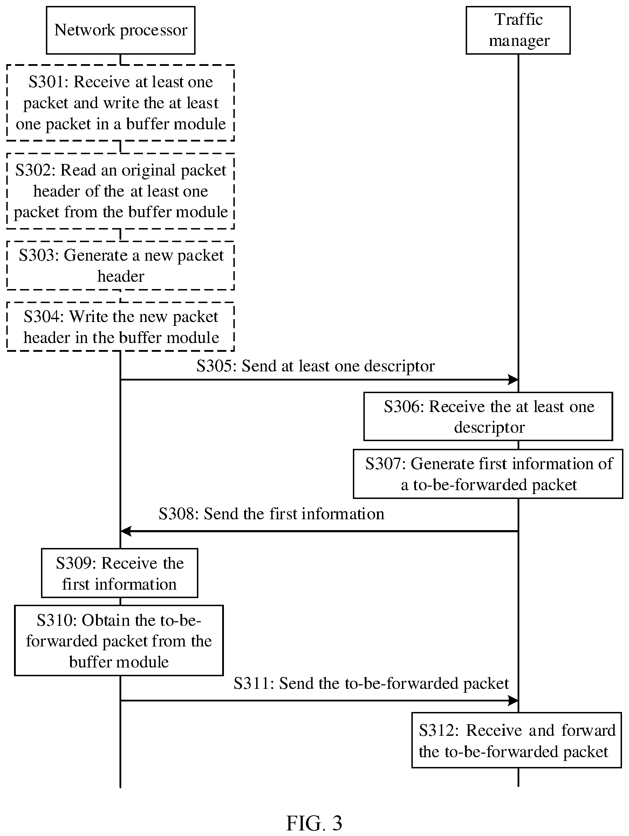

As shown in FIG. 3, an overall procedure of implementing the packet forwarding method by the packet forwarding apparatus provided in FIG. 2 is described as follows.

S301: A network processor receives at least one packet and stores the at least one packet in a buffer module.

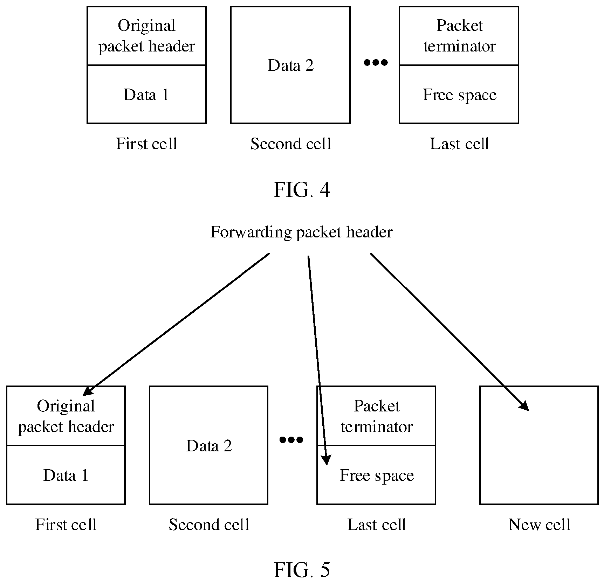

The packet includes an original packet header, packet data, and a packet terminator. For example, as shown in FIG. 4, when storing the packet in the buffer module, the network processor segments, in a form of cells, the packet into "a first cell (First cell), a second cell (Second cell), ..., and a last cell (Last cell)", and then allocates storage addresses in the buffer module 111 to store the packet. In addition, the network processor 110 records a corresponding storage linked list and stores the list in a memory. For the packet segmentation, a size of the cell may be any one of 48 bytes, 64 bytes, 128 bytes, and 256 bytes. It may be understood that the size of the cell may alternatively be set based on an actual requirement, and is not limited to the foregoing manner. The storage linked list may record a storage address of the first cell and sequence relationships between storage addresses of subsequent cells and the storage address of the first cell.

S302: The network processor reads an original packet header of the at least one packet from the buffer module.

The network processor 110 may read the original packet header of the packet from the buffer module 111 based on the foregoing storage linked list.

S303: The network processor generates a new packet header based on the read original packet header and a preset forwarding routing table.

The forwarding routing table stores a plurality of known forwarding paths, and the forwarding path records path information between a transmitter address and a receiver address corresponding to the packet. The original packet header usually carries the transmitter address corresponding to the packet. The network processor may determine a corresponding forwarding path based on the transmitter address in the original packet header and the forwarding routing table, and store the receiver address, a packet length, a packet priority of the packet in the new packet header, and the like based on the forwarding path.

S304: The network processor stores the new packet header in the buffer module.

A process in which the network processor 110 stores the new packet header in the buffer module 111 may be performed according to the following implementation.

As shown in FIG. 5, considering that a length of the new packet header usually changes after the original packet header is replaced with the new packet header, another change may occur when the network processor 110 stores a new packet header of a unicast packet in the buffer module 111. To reduce the another change caused when the new packet header of the unicast packet is stored, in this embodiment of this application, the new packet header may be divided into three parts: a part 1, a part 2, and a part 3 based on an actual situation. The part 1 overwrites an original packet header (Header) in a first cell of the packet, the part 2 is written in free space (Free space) in a last cell of the packet, and the part 3 is allocated to a new cell (New cell). In addition, for a multicast packet, because an original packet header cannot be overwritten, a new cell needs to be allocated for each new packet header. Based on this, implementation solutions provided in this embodiment of this application are described as follows.

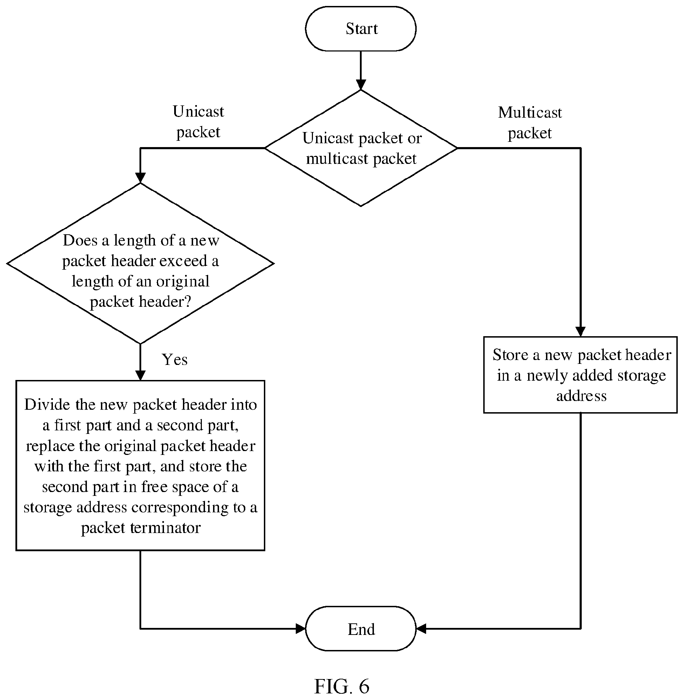

In an implementation solution, as shown in FIG. 6, a flag bit may be set in the original packet header of the packet to indicate whether the current packet is a unicast packet or a multicast packet, and the flag bit may be reserved in the generated new packet header. After generating the new packet header, the network processor 110 may first determine, based on the flag bit in the new packet header, whether the packet is a unicast packet or a multicast packet. If the identified flag bit corresponds to a unicast packet, in a process of storing the new packet header in the buffer module 111, the network processor 110 may first determine whether the length of the new packet header exceeds a length of the original packet header. If the length of the new packet header exceeds the length of the original packet header, the network processor 110 divides the new packet header into a first part (a part 1) and a second part (a part 2), replaces the original packet header with the first part (the part 1), and stores the second part (the part 2) in free space of a storage address corresponding to a cell in which the packet terminator is located. If the identified flag bit corresponds to a multicast packet, the network processor 110 may directly store the new packet header in a newly added storage address.

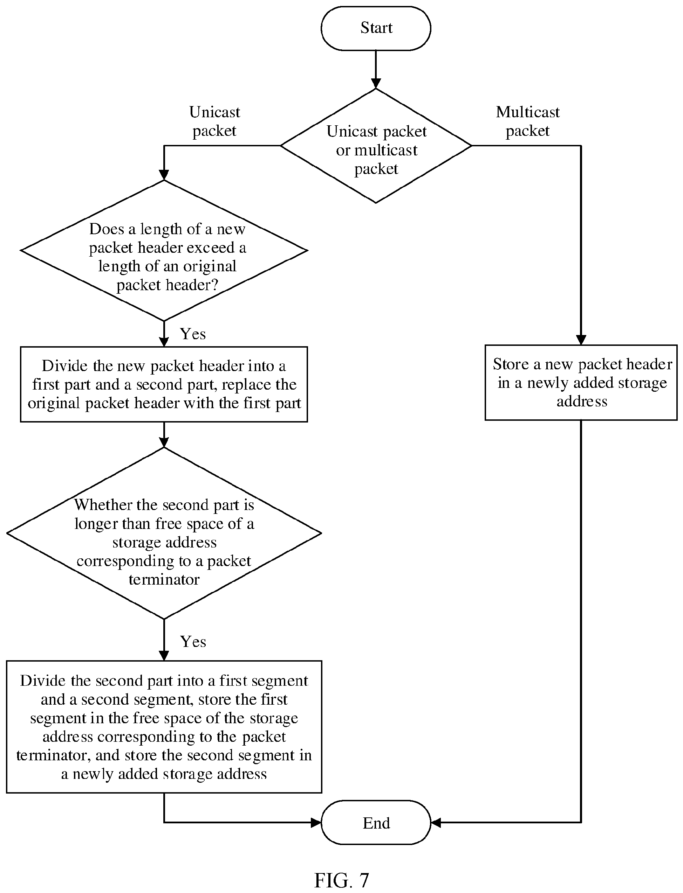

In an implementation solution, it is considered that the second part of the new packet header may be longer than the free space of the storage address corresponding to the cell in which the packet terminator is located. Therefore, as shown in FIG. 7, a flag bit may be set in the original packet header of the packet to indicate whether the current packet is a unicast packet or a multicast packet, and the flag bit may be reserved in the generated new packet header. After generating the new packet header, the network processor 110 may first determine, based on the flag bit in the new packet header, whether the packet is a unicast packet or a multicast packet. If the identified flag bit corresponds to a unicast packet, in a process of storing the new packet header in the buffer module 111, the network processor 110 may first replace the original packet header with the first part of the new packet header, and then continue to determine whether the second part of the new packet header is longer than the free space of the storage address corresponding to the cell in which the packet terminator is located. If the second part of the new packet header is longer than the free space of the storage address corresponding to the cell in which the packet terminator is located, the network processor 110 divides the second part of the new packet header into a first segment and a second segment, stores the first segment as a part 2 in the free space of the storage address corresponding to the cell in which the packet terminator is located, and stores the second segment as a part 3 in the newly added storage address. If the identified flag bit corresponds to a multicast packet, the network processor 110 may directly store the new packet header in the newly added storage address. In this manner, storage space of the buffer module 111 can be more fully utilized.

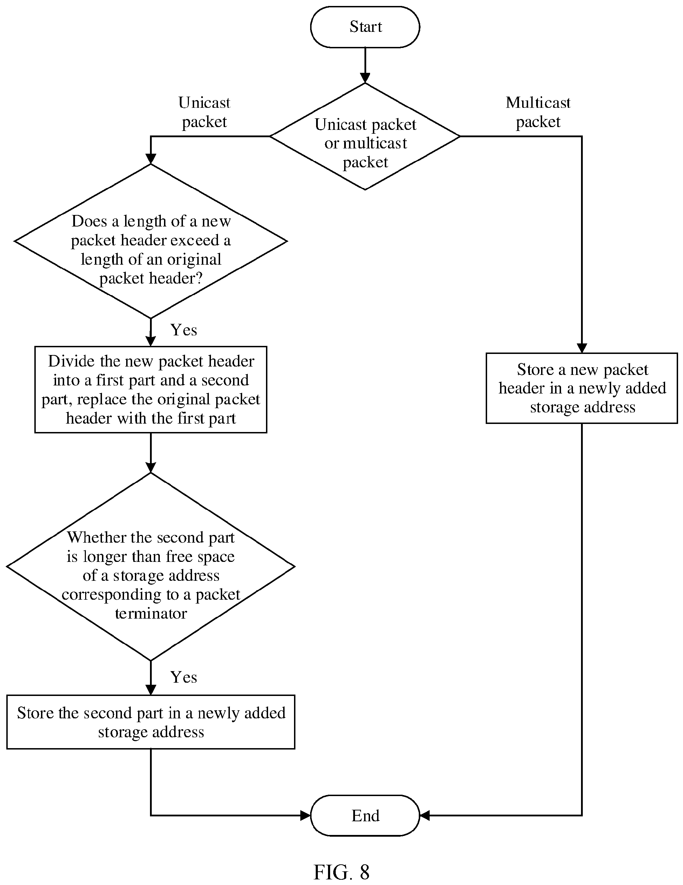

In an implementation solution, although the free space of the storage address corresponding to the cell in which the packet terminator is located may be shorter than the length of the second part of the new packet header, if the process of "dividing the second part of the new packet header into the first segment and the second segment, storing the first segment as the part 2 in the free space of the storage address corresponding to the cell in which the packet terminator is located, and storing the second segment as the part 3 in the newly added storage address" continues to be performed, a processing procedure is increased, and storage efficiency is reduced. Therefore, as shown in FIG. 8, a flag bit may be set in the original packet header of the packet to indicate whether the current packet is a unicast packet or a multicast packet, and the flag bit may be reserved in the generated new packet header. After generating the new packet header, the network processor 110 may first determine, based on the flag bit in the new packet header, whether the packet is a unicast packet or a multicast packet. If the identified flag bit corresponds to a unicast packet, in a process of storing the new packet header in the buffer module 111, the network processor 110 may further determine whether the second part of the new packet header is longer than the free space of the storage address corresponding to the cell in which the packet terminator is located. If the second part of the new packet header is longer than the free space of the storage address corresponding to the cell in which the packet terminator is located, the network processor 110 directly stores the second part of the new packet header in the newly added storage address. If the identified flag bit corresponds to a multicast packet, the network processor 110 may directly store the new packet header in the newly added storage address.

S305: The network processor sends at least one descriptor to a traffic manager.

Each descriptor includes a storage address of a new packet header of a corresponding packet, a packet priority of each packet, a packet length, and other information.

S306: The traffic manager receives the at least one descriptor.

S307: The traffic manager generates first information of a to-be-forwarded packet based on the at least one descriptor and a preset forwarding routing table.

The traffic manager 120 may generate a first mark of the to-be-forwarded packet based on the packet priority and the packet length, and include the first mark in the first information. The first mark indicates a forwarding sequence of the to-be-forwarded packet.

For example, the traffic manager 120 first determines, based on the packet priority in each descriptor, a location of a corresponding to-be-forwarded packet in a forwarding scheduling queue, and then performs numbering in an output scheduling queue on a per cell basis based on corresponding packet length information. During numbering, a queue number of the to-be-forwarded packet in the forwarding scheduling queue may be generated based on a sequence number of each cell starting from the new packet header, and is used as the first mark. Finally, the traffic manager 120 uses the storage address and the queue number of the new packet header, and the sequence number and the queue number of each cell corresponding to the packet data as the first information. The queue number indicates a forwarding sequence of the to-be-forwarded packet.

S308: The traffic manager sends the first information of the to-be-forwarded packet to the network processor.

The traffic manager 120 performs output scheduling by cells, and performs outputting by packets in the forwarding scheduling queue. When scheduling the new packet header, the traffic manager 120 outputs, to the network processor 110, the storage address and the queue number of the new packet header of the to-be-forwarded packet. When scheduling the packet data, the traffic manager 120 outputs the sequence number and the queue number of each cell corresponding to the stored packet data to the network processor 110.

S309: The network processor receives the first information sent by the traffic manager.

S310: The network processor obtains the to-be-forwarded packet from the buffer module based on the first information.

The network processor 110 may read the corresponding new packet header from the buffer module 111 based on the foregoing storage linked list and the obtained storage address of the new packet header, and read packet data based on the queue number. The storage linked list includes a storage address of a cell corresponding to the new packet header, the sequence number and the storage address of each cell corresponding to the packet data, and a sequence relationship between the cells. The network processor may sequentially read content such as the new packet header and the packet data based on the sequence relationship in the storage linked list, and perform encapsulation to obtain the to-be-forwarded packet.

S311: The network processor sends the obtained to-be-forwarded packet to the traffic manager.

S312: The traffic manager receives and forwards the to-be-forwarded packet that is sent by the network processor.

In a process of forwarding the to-be-forwarded packet, the traffic manager 120 may further encrypt the to-be-forwarded packet based on an encryption protocol. It may be understood that various currently used protocols may be used as encryption protocols used during encryption. This is not specifically limited in this embodiment of this application.

Correspondingly, an embodiment of this application provides a packet forwarding apparatus 100. The packet forwarding apparatus 100 is configured to perform the steps in the foregoing packet forwarding method. In this embodiment of this application, the packet forwarding apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of software functional module. Module division in embodiments of this application is an example, is merely logical function division. In actual implementation, another division manner may be used.

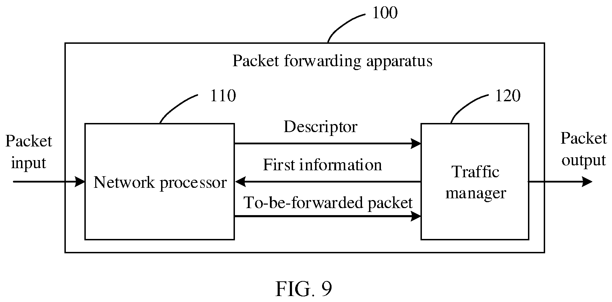

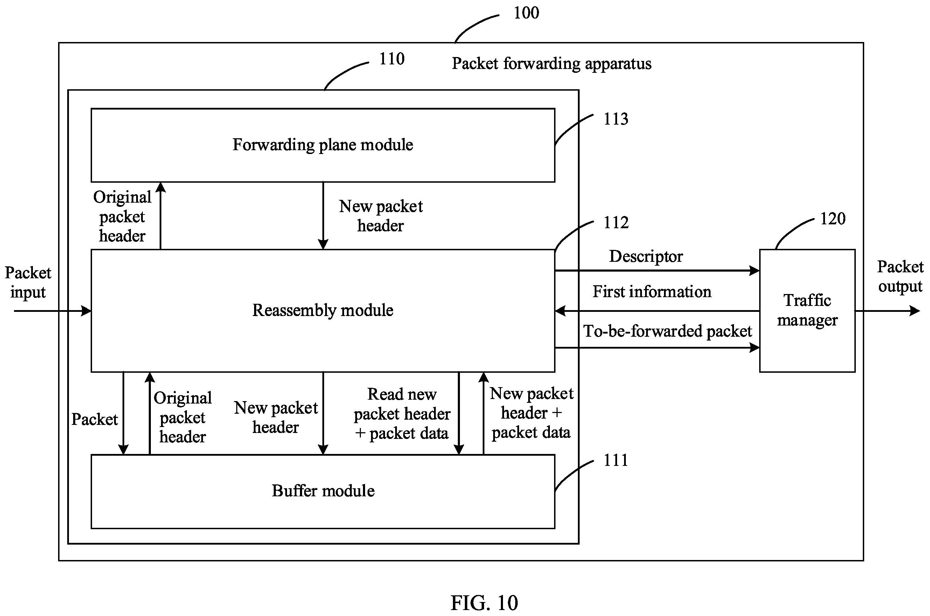

In a case that functional modules are obtained through division based on corresponding functions, FIG. 9 and FIG. 10 are diagrams of a possible structure of the packet forwarding apparatus in the foregoing embodiments. As shown in FIG. 9, the packet forwarding apparatus 100 includes a network processor 110 and a traffic manager 120 connected to the network processor 110. The network processor 110 includes a buffer module 111.

The network processor 110 is configured to send at least one descriptor to the traffic manager 120, where the at least one descriptor indicates a storage address of at least one packet in the buffer module. The traffic manager 120 is configured to send first information of a to-be-forwarded packet to the network processor 110 based on the at least one descriptor, where the to-be-forwarded packet is one of the at least one packet, and the first information indicates a storage address of the to-be-forwarded packet in the buffer module. The network processor 110 is further configured to obtain the to-be-forwarded packet based on the first information, and send the to-be-forwarded packet to the traffic manager 120. The traffic manager 120 is further configured to receive and forward the to-be-forwarded packet.

In this manner, when forwarding the to-be-forwarded packet, the traffic manager 120 may directly obtain the to-be-forwarded packet from the buffer module 111 of the network processor 110, and does not need to perform a read/write procedure on the packet again in a buffer of the traffic manager 120. This reduces power consumption caused by accessing the buffer and improves buffer utilization.

Specifically, as shown in FIG. 10, the network processor 110 includes a buffer module 111, a reassembly module 112 connected to the buffer module 111, and a forwarding plane module 113 connected to the buffer module 111. The reassembly module 112 and the forwarding plane module 113 may be implemented by using a hardware coprocessor inside the network processor 110, and the buffer module 111 may be a static random access memory (static random access memory, SRAM).

Further, the at least one descriptor further indicates information such as a packet priority and a packet length of the at least one packet. After receiving the descriptor, the traffic manager 120 may generate a first mark of the to-be-forwarded packet in a forwarding scheduling queue based on the packet priority and the packet length, and include the first mark in the first information and send the first information to the network processor. Then, the reassembly module 112 reads, from the buffer module 111 based on a forwarding sequence of the to-be-forwarded packet that is indicated by the first mark, content such as a new packet header and packet data of the to-be-forwarded packet.

For example, the traffic manager 120 may first determine, based on a packet priority in a descriptor, a location of a packet corresponding to the descriptor in a forwarding scheduling queue, and then perform numbering in a form of cells based on the packet length. During numbering, a queue number of the to-be-forwarded packet in the forwarding scheduling queue may be generated based on a sequence number of each cell starting from the new packet header, and is used as the first mark. In addition, the traffic manager 120 stores the storage address and the queue number of the new packet header, and the sequence number and the queue number of each cell corresponding to the packet data in the forwarding scheduling queue.

In an implementation solution, before sending the at least one descriptor to the traffic manager 120, the network processor 110 may further perform the following steps: First, the network processor 110 stores a received packet in the buffer module 111 in a form of cells, where each cell corresponds to a storage address in the buffer module 111, and the packet includes an original packet header, packet data, a packet terminator, and the like. Then, the network processor 110 generates a new packet header based on the original packet header and a preset forwarding routing table, and stores the new packet header in the buffer module 111. With reference to the packet forwarding apparatus shown in FIG. 10, a manner of obtaining the new packet header is as follows: First, the reassembly module 112 stores the received packet in the buffer module 111 in a form of cells, allocates a storage address to each cell in the buffer module 111 for storage, and records a corresponding storage linked list. The packet includes an original packet header, packet data, a packet terminator, and the like. Then, the reassembly module 112 generates a new packet header based on the original packet header and a preset forwarding routing table, and stores the new packet header in the buffer module 111.

For example, after receiving a packet including an original packet header, packet data, and a packet terminator, the reassembly module 112 first divides the packet into a plurality of cells (for example, a first cell (First cell), a second cell (Second cell), ..., and a last cell (Last cell) in FIG. 4) in a form of cells, allocates a storage address to each cell in the buffer module 111 for storage, and records a corresponding storage linked list. Then, the reassembly module 112 reads the original packet header of the packet from the storage address allocated by the buffer module 111, and sends the original packet header to the forwarding plane module 113. Further, the forwarding plane module 113 generates a new packet header based on the original packet header and a preset forwarding routing table, and stores the new packet header in the buffer module 111. In addition, the reassembly module 112 sends a descriptor of the new packet header to the traffic manager 120. Then, the traffic manager 120 generates a queue number of a corresponding packet in the forwarding scheduling queue according to the descriptor of the received new packet header. The traffic manager 120 performs output scheduling according to the forwarding scheduling queue, and sends the queue number of the to-be-forwarded packet in the forwarding scheduling queue, the storage address of the new packet header in the to-be-forwarded packet, and the like as the first information to the reassembly module 112. Additionally, the reassembly module 112 reads, from the buffer module 111 based on the first information and the storage linked list, the to-be-forwarded packet corresponding to the queue number, and sends the read to-be-forwarded packet to the traffic manager 120. Finally, the traffic manager 120 receives and forwards the to-be-forwarded packet. When performing output scheduling based on the forwarding scheduling queue, the traffic manager 120 performs output scheduling at a granularity of cells, and outputs are performed based on packets in the forwarding scheduling queue. For example, in a process of obtaining a to-be-forwarded packet, if a new packet header is scheduled, the traffic manager 120 sends a storage address and a queue number of the new packet header to the reassembly module 112. If packet data is scheduled, the traffic manager 120 sends, to the reassembly module 112, a sequence number and a queue number of each cell corresponding to the packet data. After obtaining the storage address of the new packet header, the reassembly module 112 reads, from the buffer module 111 based on the storage linked list, the new packet header and the packet data corresponding to the queue number, and sends the new packet header and the packet data to the traffic manager 120. The storage linked list is used to store a storage address of a first cell corresponding to a new packet header, and a sequence relationship between a storage address of each cell corresponding to subsequent packet data and the storage address of the first cell. The reassembly module 112 reads the new packet header and the packet data in sequence based on the storage address of the first cell and the sequence relationship. In addition, when forwarding the to-be-forwarded packet, the traffic manager 120 may further encrypt the to-be-forwarded packet based on an encryption protocol.

In the foregoing implementation process, the reassembly module 112 may be implemented by using a hardware coprocessor inside the network processor 110. The forwarding plane module 113 may also be implemented by using the hardware coprocessor inside the network processor 110. The buffer module 111 may use various buffers that are currently widely used. This is not specifically limited in this embodiment of this application. The foregoing storage linked list may be stored by using a memory. The memory includes but is not limited to a random access memory (random access memory, RAM), a read-only memory (read-only memory, ROM), an erasable programmable read-only memory (erasable programmable read-only memory, EPROM), a flash memory, an optical memory, or the like. The memory stores code and data. For example, the data stored in the memory may further include information about a transmission protocol, a forwarding routing table, and the like. This is not specifically limited in this embodiment of this application.

According to the foregoing implementation process, the packet only needs to be written once when being input, and is read once when being output. This reduces a quantity of times of reading and writing the packet, and reduces dynamic power consumption of the buffer module 111. In addition, for a multicast packet, only a new packet header replaces an original packet header, and packet data is to be read only once when a to-be-forwarded packet is generated and output. This greatly improves buffer utilization.

In an implementation solution, refer to FIG. 5. Considering that a length of the new packet header usually changes after the original packet header is replaced with the new packet header, another change may occur when the new packet header of the unicast packet is stored in the buffer module 111. To reduce the another change caused when the new packet header of the unicast packet is stored, in this embodiment of this application, the new packet header may be divided into three parts: a part 1, a part 2, and a part 3 based on an actual situation. The part 1 overwrites an original packet header (Header) in a first cell of the packet, the part 2 is written in free space (Free space) in a last cell of the packet, and the part 3 is allocated to a new cell (New cell). In addition, for a multicast packet, because an original packet header cannot be overwritten, a new cell needs to be allocated for each new packet header. Based on this, specific implementation solutions are described as follows.

In an implementation solution, refer to FIG. 6. A flag bit may be set in the original packet header of the packet to indicate whether the current packet is a unicast packet or a multicast packet, and the flag bit may be reserved in the generated new packet header. After receiving the new packet header generated by the forwarding plane module 113, the reassembly module 112 may first determine, based on the flag bit in the new packet header, whether the packet is a unicast packet or a multicast packet. If the identified flag bit corresponds to a unicast packet, in a process of storing the new packet header in the buffer module 111, the reassembly module 112 may first determine whether the length of the new packet header exceeds a length of the original packet header. If the length of the new packet header exceeds the length of the original packet header, the reassembly module 112 divides the new packet header into a first part (a part 1) and a second part (a part 2), replaces the original packet header with the first part (the part 1), and stores the second part (the part 2) in free space of a storage address corresponding to a cell in which the packet terminator is located. If the identified flag bit corresponds to a multicast packet, the reassembly module 112 may directly store the new packet header in a newly added storage address.

In an implementation solution, the second part of the new packet header may be longer than the free space of the storage address corresponding to the cell in which the packet terminator is located. Therefore, refer to FIG. 7. A flag bit may be set in the original packet header of the packet to indicate whether the current packet is a unicast packet or a multicast packet, and the flag bit may be reserved in the generated new packet header. After receiving the new packet header generated by the forwarding plane module 113, the reassembly module 112 may first determine, based on the flag bit in the new packet header, whether the packet is a unicast packet or a multicast packet. If the identified flag bit corresponds to a unicast packet, in a process of storing the new packet header in the buffer module 111, the reassembly module 112 may first replace the original packet header with the first part of the new packet header, and then continue to determine whether the length of the second part of the new packet header exceeds the free space of the storage address corresponding to the cell in which the packet terminator of the packet is located. If the second part of the new packet header is longer than the free space of the storage address corresponding to the cell in which the packet terminator of the packet is located, the reassembly module 112 divides the second part of the new packet header into a first segment and a second segment, stores the first segment as a part 2 in the free space of the storage address corresponding to the cell in which the packet terminator is located, and stores the second segment as a part 3 in the new added storage address. If the identified flag bit corresponds to a multicast packet, the reassembly module 112 may directly store the new packet header in the newly added storage address. In this manner, the storage space of the buffer module 111 can be more fully utilized.

In an implementation solution, although the free space of the storage address corresponding to the cell in which the packet terminator is located may be shorter than the length of the second part of the new packet header, if the process of "dividing the second part of the new packet header into the first segment and the second segment, storing the first segment as the part 2 in the free space of the storage address corresponding to the cell in which the packet terminator is located, and storing the second segment as the part 3 in the newly added storage address" continues to be performed, a processing procedure is increased, and storage efficiency is reduced. Therefore, refer to FIG. 8. A flag bit may be set in the original packet header of the packet to indicate whether the current packet is a unicast packet or a multicast packet, and the flag bit may be reserved in a generated new packet header. After receiving the new packet header generated by the forwarding plane module 113, the reassembly module 112 may first determine, based on the flag bit in the new packet header, whether the packet is a unicast packet or a multicast packet. If the identified flag bit corresponds to a unicast packet, in a process of storing the new packet header in the buffer module 111, the reassembly module 112 may further determine whether the second part of the new packet header is longer than the free space of the storage address corresponding to the cell in which the packet terminator of the packet is located. If the second part of the new packet header is longer than the free space of the storage address corresponding to the cell in which the packet terminator of the packet is located, the reassembly module 112 directly stores the second part of the new packet header in the newly added storage address. If the identified flag bit corresponds to a multicast packet, the reassembly module 112 may directly store the new packet header in the newly added storage address.

All related content of the steps in the foregoing method embodiments may be cited in function descriptions of corresponding functional modules. Details are not described herein again.

In this embodiment, the packet forwarding apparatus is presented in a form of functional modules obtained through division in an integrated manner. The "module" herein may be a specific ASIC, a circuit, a processor and a memory that executes one or more software or firmware programs, an integrated logic circuit, and/or another device capable of providing the foregoing functions. In a simple embodiment, a person skilled in the art may figure out that the packet forwarding apparatus may be in a form of the packet forwarding apparatus shown in FIG. 2.

For example, the processor 201 in the packet forwarding apparatus shown in FIG. 2 may invoke the computer-executable instructions stored in the memory 202, so that the packet forwarding apparatus 100 performs the packet forwarding method in the foregoing method embodiment.

Specifically, functions/implementation processes of the network processor 110 and the traffic manager 120 in FIG. 9 may be implemented by the processor 201 in the packet forwarding apparatus 100 shown in FIG. 2 by invoking the computer-executable instructions stored in the memory 202. Certainly, the network processor 110 and the traffic manager 120 may be integrated into a same processor 201, or may be disposed in two discrete processors 201.

Optionally, an embodiment of this application further provides a packet forwarding apparatus (for example, the packet forwarding apparatus may be a communication chip or a chip system). The packet forwarding apparatus includes a processor and an interface. The processor is configured to read instructions to perform the method in any one of the foregoing method embodiments. In a possible design, the packet forwarding apparatus further includes a memory. The memory is configured to store necessary program instructions and necessary data. The processor may invoke program code stored in the memory, to indicate the packet forwarding apparatus to perform the method in any one of the foregoing method embodiments. Certainly, the communication apparatus may not include the memory. When the packet forwarding apparatus is a chip system, the chip system may include a chip, or may include a chip and another discrete device. This is not specifically limited in this embodiment of this application.

In an implementation solution, an embodiment of this application further provides a computer-readable storage medium. The computer-readable storage medium stores computer-readable program instructions. When the program instructions are run on a packet forwarding apparatus, the method in any one of the implementation solutions in FIG. 3 to FIG. 8 is implemented. For example, the computer-readable storage medium may be a read-only memory (read-only memory, ROM), a random access memory (random access memory, RAM), a compact disc read-only memory (compact disc read-only memory, CD-ROM), a magnetic tape, a floppy disk, a USB flash drive, an optical data storage device, or the like.

In an implementation solution, an embodiment of this application further provides a computer program product. When the computer program product is run on a packet forwarding apparatus, the packet forwarding apparatus performs the method in any one of the foregoing implementation solutions.

Based on the foregoing descriptions of the implementations, a person skilled in the art may clearly understand that for the purpose of convenient and brief descriptions, division into the foregoing functional modules is merely used as an example for description. In actual application, the foregoing functions can be allocated to different functional modules for implementation based on a requirement. In other words, an inner structure of an apparatus is divided into different functional modules to implement all or some of the functions described above.

In the several embodiments provided in this application, it should be understood that the disclosed packet forwarding apparatus and packet forwarding method may be implemented in other manners. For example, the described packet forwarding apparatus embodiment is merely an example. For example, division into modules or units is merely logical function division and may be another division in actual implementation. For example, a plurality of units or components may be combined or integrated into another apparatus, or some features may be ignored or not be performed. In addition, the displayed or discussed mutual couplings or direct couplings or communication connections may be implemented by using some interfaces. The indirect couplings or communication connections between apparatuses or units may be implemented in electronic, mechanical, or other forms.

The units described as separate parts may or may not be physically separate, and the parts displayed as units may be one or more physical units, may be located in one place, or may be distributed on different places. Some or all of the units may be selected based on actual requirements to achieve the objectives of the solutions of embodiments.

In addition, functional modules in embodiments of this application may be integrated into one processing unit, or each of the units may exist alone physically, or two or more units are integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on this understanding, the technical solutions in embodiments of this application essentially, or the part contributing to the conventional technology, or all or some of the technical solutions may be implemented in a form of software product. The software product is stored in a storage medium, and includes several instructions used to enable a device, for example, a single-chip microcomputer, a chip, or a processor (processor) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A packet forwarding apparatus, comprising a network processor and a traffic manager connected to the network processor, wherein the network processor comprises a buffer module;
the network processor is configured to send at least one descriptor to the traffic manager, wherein the at least one descriptor indicates a storage address of at least one packet in the buffer module;
the traffic manager is configured to send first information of a to-be-forwarded packet to the network processor based on the at least one descriptor, wherein the to-be-forwarded packet is one of the at least one packet, and the first information indicates a storage address of the to-be-forwarded packet in the buffer module;
the network processor is configured to: obtain the to-be-forwarded packet based on the first information, and send the to-be-forwarded packet to the traffic manager; and
the traffic manager is further configured to receive and forward the to-be-forwarded packet.

2. The packet forwarding apparatus according to claim 1, wherein the at least one descriptor further indicates a packet priority and a packet length of the at least one packet;
the traffic manager is further configured to determine a first mark based on the packet priority and the packet length, wherein the first mark indicates a forwarding sequence of the to-be-forwarded packet; and
that the traffic manager is configured to send first information of a to-be-forwarded packet to the network processor based on the at least one descriptor specifically comprises:
sending the first information based on the at least one descriptor and the first mark, wherein the first information further carries the first mark.

3. The packet forwarding apparatus according to claim 1 or 2, wherein the network processor is further configured to:
store the at least one received packet in the buffer module in a form of cells, wherein each cell corresponds to a storage address in the buffer module, and the at least one packet comprises an original packet header, packet data, and a packet terminator;
obtain the original packet header from the buffer module; and
generate a new packet header based on the original packet header and a preset forwarding routing table, and store the new packet header in the buffer module.

4. The packet forwarding apparatus according to claim 3, wherein that the network processor is further configured to: generate a new packet header based on the original packet header and a preset forwarding routing table, and store the new packet header in the buffer module comprises:
when the packet is a unicast packet and a length of the new packet header exceeds a length of the original packet header, dividing the new packet header into a first part and a second part, replacing the original packet header with the first part, and storing the second part in free space of a storage address corresponding to a cell in which the packet terminator is located.

5. The packet forwarding apparatus according to claim 4, wherein that the network processor is further configured to store the second part in free space of a storage address corresponding to a cell in which the packet terminator is located comprises:
when the second part is longer than the free space of the storage address corresponding to the cell in which the packet terminator is located, dividing the second part into a first segment and a second segment, storing the first segment in the free space of the storage address corresponding to the cell in which the packet terminator is located, and storing the second segment in a newly added storage address.

6. The packet forwarding apparatus according to claim 3, wherein that the network processor is further configured to generate the new packet header based on the original packet header and the preset forwarding routing table, and store the new packet header in the buffer module further comprises:
when the packet is a unicast packet and a length of the new packet header exceeds a length of the original packet header, dividing the new packet header into a first part and a second part, replacing the original packet header with the first part, and storing the second part in a newly added storage address.

7. The packet forwarding apparatus according to any one of claims 3 to 6, wherein that the network processor is further configured to generate the new packet header based on the original packet header and the preset forwarding routing table, and store the new packet header in the buffer module further comprises:
when the packet is a multicast packet, storing the new packet header in the newly added storage address.

8. A packet forwarding method, applied to a packet forwarding apparatus, wherein the packet forwarding apparatus is configured to forward a packet, the packet forwarding apparatus comprises a network processor and a traffic manager, and the method comprises:
sending, by the network processor, at least one descriptor to the traffic manager, wherein the at least one descriptor indicates a storage address of at least one packet in a buffer module;
sending, by the traffic manager, first information of a to-be-forwarded packet to the network processor based on the at least one descriptor, wherein the to-be-forwarded packet is one of the at least one packet, and the first information indicates a storage address of the to-be-forwarded packet in the buffer module;
obtaining, by the network processor, the to-be-forwarded packet based on the first information, and sending the to-be-forwarded packet to the traffic manager; and
receiving and forwarding, by the traffic manager, the to-be-forwarded packet.

9. The method according to claim 8, wherein the at least one descriptor further indicates a packet priority and a packet length of the at least one packet, and the method further comprises:
determining, by the traffic manager, a first mark based on the packet priority and the packet length, wherein the first mark indicates a forwarding sequence of the to-be-forwarded packet; and
the sending, by the traffic manager, first information of a to-be-forwarded packet to the network processor based on the at least one descriptor specifically comprises:
sending, by the traffic manager, the first information based on the at least one descriptor and the first mark, wherein the first information further carries the first mark.

10. The method according to claim 8 or 9, wherein before the sending, by the network processor, at least one descriptor to the traffic manager, the method further comprises:
storing the at least one received packet in the buffer module in a form of cells, wherein each cell corresponds to a storage address in the buffer module, and the at least one packet comprises an original packet header, packet data, and a packet terminator;
obtaining the original packet header from the buffer module; and
generating a new packet header based on the original packet header and a preset forwarding routing table, and storing the new packet header in the buffer module.

11. The method according to claim 10, wherein generating the new packet header based on the original packet header and the preset forwarding routing table, and storing the new packet header in the buffer module comprises:
when the packet is a unicast packet and a length of the new packet header exceeds a length of the original packet header, dividing the new packet header into a first part and a second part, replacing the original packet header with the first part, and storing the second part in free space of a storage address corresponding to a cell in which the packet terminator is located.

12. The method according to claim 11, wherein the storing the second part in free space of a storage address corresponding to a cell in which the packet terminator is located further comprises:
when the second part is longer than the free space of the storage address corresponding to the cell in which the packet terminator is located, dividing the second part into a first segment and a second segment, storing the first segment in the free space of the storage address corresponding to the cell in which the packet terminator is located, and storing the second segment in a newly added storage address.

13. The method according to claim 10, wherein generating the new packet header based on the original packet header and the preset forwarding routing table, and storing the new packet header in the buffer module further comprises:
when the packet is a unicast packet and a length of the new packet header exceeds a length of the original packet header, dividing the new packet header into a first part and a second part, replacing the original packet header with the first part, and storing the second part in a newly added storage address.

14. The method according to any one of claims 8 to 13, wherein generating the new packet header based on the original packet header and the preset forwarding routing table, and storing the new packet header in the buffer module further comprises:
when the packet is a multicast packet, storing the new packet header in the newly added storage address.

15. A communication chip, comprising a processor and a memory, wherein the memory is configured to store program instructions, and the processor is configured to execute the program instructions in the memory, to implement the method according to any one of claims 8 to 14.

16. A network device, wherein the network device comprises the packet forwarding apparatus according to any one of claims 1 to 7.

17. A computer-readable storage medium, wherein the computer-readable storage medium stores computer-readable program instructions, and when the program instructions are run on a packet forwarding apparatus, the method according to any one of claims 8 to 14 is implemented.
